(19) Europäisches Patentamt
European Patent Office
Office européen des brevets

(11) **EP 4 269 636 A1**

(12) **EUROPEAN PATENT APPLICATION**
published in accordance with Art. 153(4) EPC

(43) Date of publication:
**01.11.2023 Bulletin 2023/44**

(21) Application number: **21910382.7**

(22) Date of filing: **10.12.2021**

(51) International Patent Classification (IPC):
*C22C 9/00* (2006.01)    *B22F 1/00* (2022.01)
*B22F 1/05* (2022.01)    *B22F 10/28* (2021.01)
*B22F 10/34* (2021.01)    *B33Y 10/00* (2015.01)
*B33Y 70/00* (2020.01)    *B33Y 80/00* (2015.01)
*C22C 1/04* (2023.01)    *C22F 1/08* (2006.01)
*C22F 1/00* (2006.01)

(52) Cooperative Patent Classification (CPC):
**B22F 1/00; B22F 1/05; B22F 10/28; B22F 10/34;
B33Y 10/00; B33Y 70/00; B33Y 80/00; C22C 1/04;
C22C 9/00; C22F 1/08;** C22F 1/00

(86) International application number:
**PCT/JP2021/045516**

(87) International publication number:
**WO 2022/138233 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2020 JP 2020216764**

(71) Applicant: **Fukuda Metal Foil & Powder Co., Ltd.
Kyoto 600-8435 (JP)**

(72) Inventors:
• **MATSUMOTO, Seiichi
  Kyoto-shi, Kyoto 607-8305 (JP)**
• **SUGITANI, Yuji
  Kyoto-shi, Kyoto 607-8305 (JP)**
• **IMAI, Ken
  Kyoto-shi, Kyoto 607-8305 (JP)**
• **ISHIDA, Yu
  Kyoto-shi, Kyoto 607-8305 (JP)**
• **KUSHIHASHI, Makoto
  Kyoto-shi, Kyoto 607-8305 (JP)**

(74) Representative: **TBK
Bavariaring 4-6
80336 München (DE)**

(54) **COPPER ALLOY POWDER FOR ADDITIVE MANUFACTURING AND METHOD FOR EVALUATING SAID COPPER ALLOY POWDER, METHOD FOR PRODUCING COPPER ALLOY ADDITIVELY-MANUFACTURED ARTICLE, AND COPPER ALLOY ADDITIVELY-MANUFACTURED ARTICLE**

(57) According to the present invention, it is possible to obtain a copper alloy laminated and shaped object having a high strength and a high electrical conductivity. This invention provides a copper alloy powder for laminating and shaping, wherein the copper alloy powder contains a chromium element an amount of which is equal to or more than 0.40 wt% and equal to or less than 1.5 wt%, a silver element an amount of which is equal to or more than 0.10 wt% and equal to or less than 1.0 wt%, and a balance of pure copper and unavoidable impurities. This invention also provides an evaluation method of a copper alloy powder for laminating and shaping, including laminating and shaping a copper alloy laminated and shaped object using the copper alloy powder for laminating and shaping as an evaluation target, measuring an electrical conductivity X (%IACS) and a Vickers hardness (Hv) of the copper alloy laminated and shaped object, and evaluating the copper alloy powder for laminating and shaping based on whether or not, if the electrical conductivity X (%IACS) and the Vickers hardness (Hv) are plotted on a two-dimensional graph formed by an X-axis and a Y-axis, a point (X, Y) is located on a high strength side and a high electrical conductivity side of a boundary line represented by (Y = -6X + 680).

EP 4 269 636 A1

FIG. 1

**Description**

TECHNICAL FIELD

The present invention relates to a copper alloy powder for laminating and shaping, a method of evaluating a copper alloy powder for laminating and shaping, a method of manufacturing a copper alloy object, and a copper alloy object.

BACKGROUND ART

In the above technical field, patent literature 1 discloses a copper alloy powder for laminating and shaping, which is manufactured by an atomization method and contains a chromium element more than 1.00 mass% to 2.80 mass% or less and copper as a balance.

CITATION LIST

PATENT LITERATURE

Patent literature 1: Japanese Patent No. 6389557

SUMMARY OF THE INVENTION

TECHNICAL PROBLEM

However, in general, the strength (hardness) and the electrical conductivity of a copper alloy have a tradeoff relationship, and the technique described in the above literature cannot obtain a copper alloy laminated and shaped object having a high strength and a high electrical conductivity.
The present invention enables to provide a technique of solving the above-described problem.

SOLUTION TO PROBLEM

One example aspect of the invention provides a copper alloy powder for laminating and shaping, wherein the copper alloy powder contains a chromium element an amount of which is equal to or more than 0.40 wt% and equal to or less than 1.5 wt%, a silver element an amount of which is equal to or more than 0.10 wt% and equal to or less than 1.0 wt%, and a balance of pure copper and unavoidable impurities.
Another aspect of the present invention provides a copper alloy object laminated and shaped by a laminating and shaping apparatus using a copper alloy powder for laminating and shaping according to any one of claims 1 to 4, wherein the copper alloy object contains a chromium element an amount of which is equal to or more than 0.40 wt% and equal to or less than 1.5 wt%, a silver element an amount of which is equal to or more than 0.10 wt% and equal to or less than 1.0 wt%, and a balance of pure copper and unavoidable impurities.
Still other aspect of the present invention provides a method of manufacturing a copper alloy object, comprising:

laminating and shaping a copper alloy object by a laminating and shaping apparatus using a copper alloy powder for laminating and shaping according to any one of claims 1 to 5; and
holding the copper alloy object at 450°C to 700°C.

Still other aspect of the present invention provides a method of evaluating a copper alloy powder for laminating and shaping, comprising:

laminating and shaping a copper alloy object using the copper alloy powder for laminating and shaping as an evaluation target;
measuring an electrical conductivity X (%IACS) and a Vickers hardness (Hv) of the copper alloy object; and
evaluating the copper alloy powder for laminating and shaping based on whether or not, if the electrical conductivity X (%IACS) and the Vickers hardness (Hv) are plotted on a two-dimensional graph formed by an X-axis and a Y-axis, a point (X, Y) is located on a high strength side and a high electrical conductivity side of a boundary line represented by $(Y = -6X + 680)$.

ADVANTAGEOUS EFFECTS OF INVENTION

According to the present invention, it is possible to obtain a copper alloy laminated and shaped object having a high strength and a high electrical conductivity.

BRIEF DESCRIPTION OF DRAWINGS

Fig. 1 is a graph showing the relationship and the boundary line between the Vickers hardness and the electrical conductivity of a laminated and shaped object in patent literature 1;
Fig. 2 is a flowchart showing the procedure of a method of evaluating a copper alloy powder for laminating and shaping according to the example embodiment;
Fig. 3 shows a state diagram of a binary alloy of copper and silver elements and a state diagram of a binary alloy chromium and copper in the copper alloy powder for laminating and shaping used in this example embodiment; and
Fig. 4 is a graph showing the relationship and the boundary line between the Vickers hardness and the electrical conductivity of each of copper alloy laminated and shaped objects obtained in examples and comparative examples.

DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

[First Example Embodiment]

In this example embodiment, a new evaluation method of a copper alloy powder for laminating and shaping will be described. Before that, the current situation of copper alloy powders for laminating and shaping will be described.

<Current Situation of Copper Alloy Powders for Laminating and Shaping>

A laminating and shaping technique enables to produce a product that has a complex shape and is difficult to manufacture by a conventional processing technique, and this technique is expected to be applied in various fields. In particular, application of metal materials excellent in a mechanical characteristic is demanded.
In the metal materials, copper has a high electrical conductivity or thermal conductivity, and application of the laminating and shaping method to a product having a complex shape such as a heat sink or a heat exchanger is expected. However, major materials that have conventionally been applied as metal powders for laminating and shaping are iron, nickel, aluminum, titanium, and alloys thereof, and there are still few application examples of copper and copper alloys. The reason for this is as follows. Since copper has a high electrical conductivity and a high thermal conductivity, heat energy that is applied as a laser beam at the time of laminating and shaping is quickly radiated and diffused, and therefore, copper cannot sufficiently be molten so it is difficult to obtain a high-density laminated and shaped object.
On the other hand, patent literature 1 discloses a copper alloy powder for laminating and shaping, which is manufactured by an atomization method and contains a chromium element more than 1.00 mass% and 2.80 mass% or less and copper as a balance. In manufacturing, since the copper alloy powder is rapidly solidified from a molten state, chromium element is in a super-saturated solid solution state. Since the thermal diffusibility/heat dissipation lowers, and the thermal conductivity lowers, the copper alloy powder can easily be molten and shaped using a low-output shaping apparatus. At the time of laminating and shaping, a shaping region is temporarily molten and then rapidly solidified, and therefore, chromium element is in the super-saturated solid solution state. Hence, when the laminated and shaped object undergoes aging treatment, chromium is precipitated from copper that is the substrate, and the purity of the copper substrate rises accordingly, and the electrical conductivity improves. At the same time, the strength can be improved by precipitation strengthening.
According to an example of patent literature 1, in aging at 450°C to 500°C at which the strength is maximized, a copper alloy laminated and shaped object having an electrical conductivity of 47.64%IACS to 73.96%IACS and a Vickers hardness of 213.3 to 259.8 Hv can be obtained.

<Method of Evaluating Copper Alloy Powder for Laminating and Shaping>

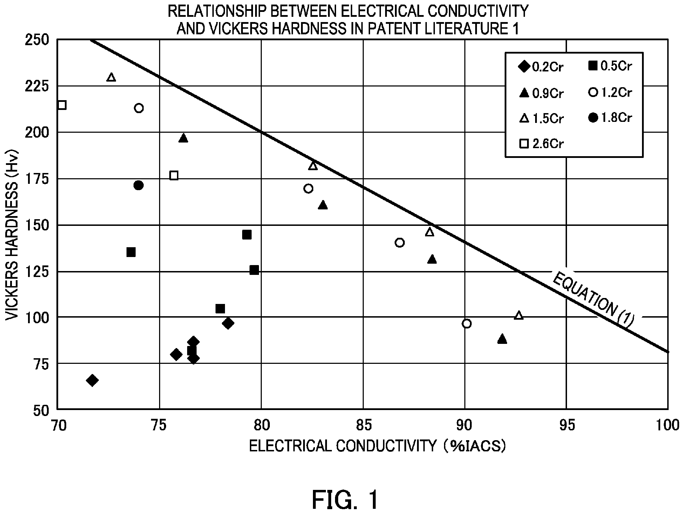

However, in general, the strength or hardness and the electrical conductivity of a copper alloy have a tradeoff relationship. For example, in the case of the laminated and shaped object described in patent literature 1, the relationship between the Vickers hardness and the electrical conductivity can be organized as shown in Fig. 1. Fig. 1 is a graph showing the relationship and the boundary line between the Vickers hardness and the electrical conductivity of the laminated and shaped object in patent literature 1.

As shown in Fig. 1, the relationship between a Vickers hardness Y (Hv) and an electrical conductivity X (%IACS) is limited in a region on the lower side of the boundary line represented by equation (1) below, that is, in a region on a low strength side and a low electrical conductivity side. Including the case of patent literature 1, in general, when the aging treatment temperature is raised, or the aging treatment time is prolonged, the electrical conductivity can be improved. However, since this causes overaging, precipitated chromium particles become coarse, and the strength largely lowers. That is, this indicates that, under aging treatment conditions that maximize the strength, chromium element cannot completely be precipitated from the copper substrate, and chromium element more than the solid-solubility limit remains in the substrate.

$$Y = -6X + 680 \qquad\qquad (1)$$

A practical copper alloy for laminating and shaping is required not only to implement a high density and develop an excellent electrical conductivity intrinsic to copper but also to simultaneously achieve the electrical conductivity and the mechanical strength at high level. However, as described above, since the electrical conductivity and the strength have a tradeoff relationship, it is not easy to achieve both characteristics. For example, in patent literature 1, a copper alloy for laminating and shaping in a region on the upper side of the boundary line represented by equation (1) above, that is, in a region on a high strength side and a high electrical conductivity side cannot be obtained.

In this example embodiment, aiming at simultaneously achieving the electrical conductivity and the mechanical strength at high level, equation (1) is used as a reference that specifically indicates a high strength and a high electrical conductivity. When the characteristics are plotted on a graph with an X-axis representing the electrical conductivity (%IACS) and a Y-axis representing the Vickers hardness (Hv), the balance between the strength and the electrical conductivity can be evaluated from a linear function on the X-Y graph. Since the strength and the electrical conductivity have a tradeoff relationship, and the Vickers hardness lowers as the electrical conductivity rises, these can be expressed as a linear function with a negative slope on the X-Y graph.

In a metal, the electrical conductivity and the thermal conductivity almost hold a proportional relationship, and this is known as the Wiedemann-Franz law. Hence, a copper alloy laminated and shaped object laminated and shaped by a laminating and shaping apparatus using a copper alloy powder for laminating and shaping according to the present invention has an excellent electrical conductivity, and can therefore be used as a copper alloy laminated and shaped object having a high thermal conductivity.

(Procedure of Method of Evaluating Copper Alloy Powder for Laminating and Shaping)

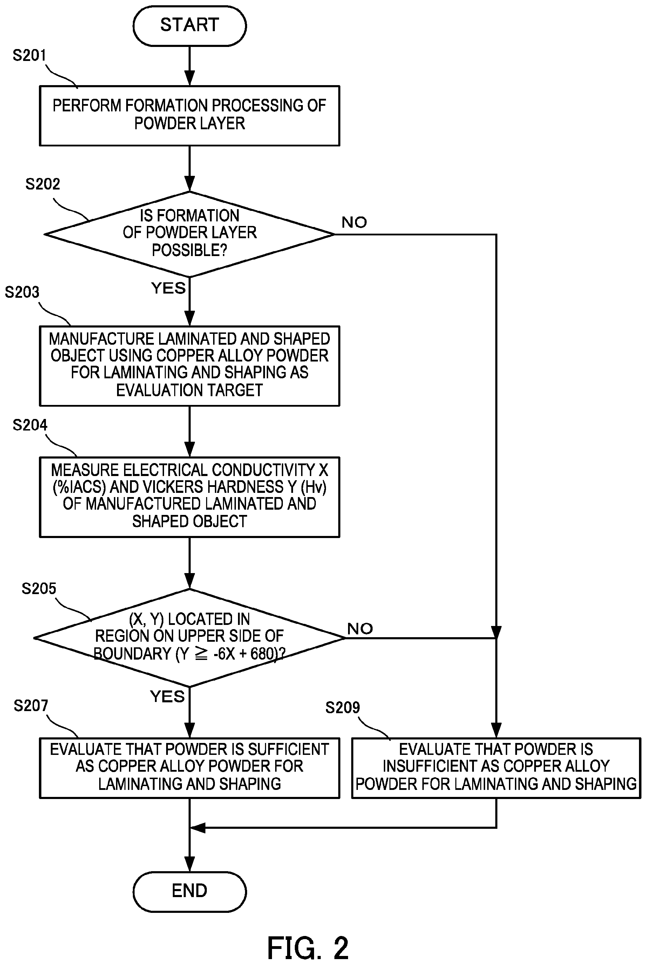

Fig. 2 is a flowchart showing the procedure of an evaluation method of the copper alloy powder for laminating and shaping according to this example embodiment.

In step S201 of Fig. 2, formation processing of a powder layer for laminating and shaping is performed using a copper alloy powder for laminating and shaping of an evaluation target. In step S202, it is determined whether a powder layer capable of laminating and shaping can be formed by the copper alloy powder for laminating and shaping of the evaluation target. If the squeegeeing property is poor, and the powder layer capable of laminating and shaping cannot be formed, it is evaluated in step S209 that the powder is insufficient as a copper alloy powder for laminating and shaping.

If the squeegeeing property is sufficient, and the powder layer capable of laminating and shaping can be formed, in step S203, a laminated and shaped object is manufactured using a laminating and shaping apparatus or the like using the copper alloy powder for laminating and shaping as the evaluation target. In step S204, the electrical conductivity X (%IACS) and the Vickers hardness Y (Hv) of the manufactured laminated and shaped object are measured. In step S205, it is determined whether a plot point (X, Y) on a two-dimensional graph (see Fig. 1) whose axes represent the measured electrical conductivity X (%IACS) and Vickers hardness Y (Hv) is located in the region ($Y \geq -6X + 680$) on the upper side of the boundary line ($Y = -6X + 680$).

If the plot point is located in the upper region ($Y \geq -6X + 680$), it is evaluated in step S207 that the powder is sufficient as a copper alloy powder for laminating and shaping. On the other hand, if the plot point is located in the lower region ($Y < -6X + 680$), it is evaluated in step S209 that the powder is insufficient as a copper alloy powder for laminating and shaping.

According to the evaluation method of the copper alloy powder for laminating and shaping of this example embodiment, it is possible to evaluate a copper alloy powder for laminating and shaping, which can obtain a copper alloy laminated and shaped object having a high strength and a high electrical conductivity.

[Second Example Embodiment]

In this example embodiment, a copper alloy powder for laminating and shaping for which a sufficiently satisfactory result is obtained in the evaluation method of a copper alloy powder for laminating and shaping according to the first example embodiment will be described.

<Materials of High Evaluation>

In this example embodiment, there are provided a manufacturing method of a raw material powder capable of implementing a characteristic in the region on the upper side of the boundary line represented by equation (1), that is, in the region on the high strength side and the high electrical conductivity side, the raw material powder, and a laminated and shaped object obtained using the raw material powder.

Aiming at the region on the upper side of the boundary line represented by equation (1), that is, the region on the high strength side and the high electrical conductivity side, and as a result, the present inventors found an alloy with a characteristic in the region on the upper side of the boundary line represented by equation (1), that is, in the region on the high strength side and the high electrical conductivity side by making a ternary alloy by adding silver element to a copper-chromium alloy.

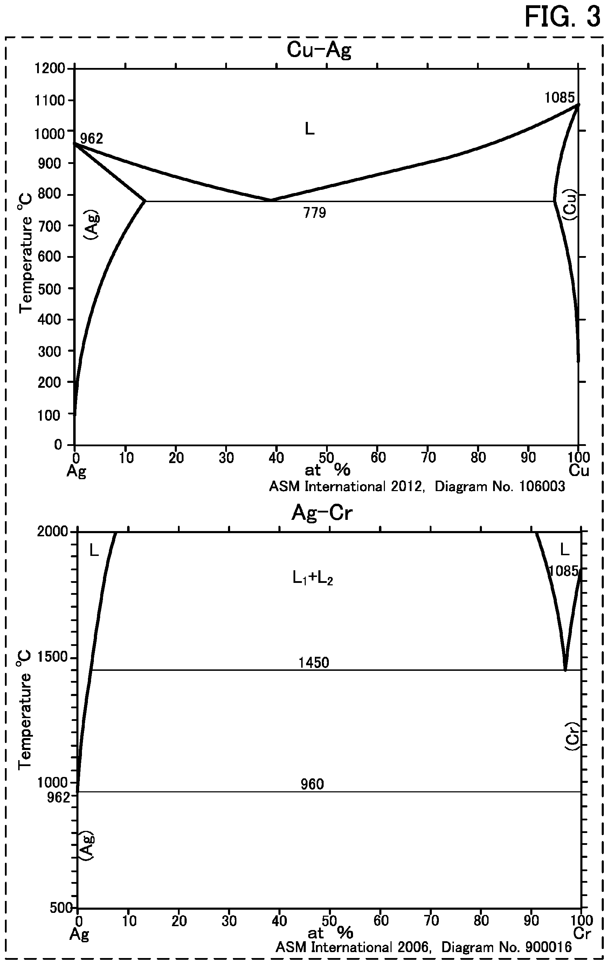

That is, to simultaneously achieve the high electrical conductivity and the high mechanical strength in balance at high level, it is necessary to sufficiently completely precipitate chromium element even at a relatively low aging treatment temperature. To promote precipitation of a solute element from a solvent element that is a substrate, it is effective to raise the chemical potential of the solute element. Hence, it can be considered that if an element that raises the chemical potential of chromium element in the substrate is added to a copper-chromium alloy, repulsive interaction between the elements is enhanced, the chemical potential of chromium element rises, and precipitation of chromium element can be promoted. We examined adding an element that raises the chemical potential of chromium element as a third element to a copper-chromium alloy. We searched various elements for candidates of the third element with a high repulsive interaction and found silver element. Since it can be estimated from the state diagram of Fig. 3 that there is a possibility that silver element has a high repulsive interaction to both chromium and copper elements that is the substrate, even a small amount of silver element can be considered as effectively acting on the chemical potential rise of chromium element. In addition, silver element is one of alloy elements for copper which have the weakest effect of increasing the resistivity of the substrate, and even if silver element is added as the third element to the copper-chromium alloy, the influence on the electrical conductivity can be expected to be suppressed minimum. Thus, the present inventors arrived at adding silver element as the third element to the copper-chromium alloy and the present invention was accomplished as a result of intensive studies.

Based on the above-described examination, in this example embodiment, it is possible to provide a copper alloy powder for laminating and shaping capable of simultaneously achieving a high electrical conductivity and a high strength at high level and a laminated and shaped object thereof.

More specifically, the copper alloy powder for laminating and shaping according to this example embodiment is a copper alloy powder containing a chromium element an amount of which is equal to or more than 0.40 wt% or equal to or less than 1.5 wt%, 0.10 to 1.0 wt% of a silver element an amount of which is equal to or more than 0.10 wt% or equal to or less than 1.0 wt%, and a balance of pure copper and unavoidable impurities.

Also, in the copper alloy powder for laminating and shaping according to this example embodiment, the 50% particle size is equal to or more than 3 $\mu$m and equal to or less than 200 $\mu$m.

In the copper alloy powder for laminating and shaping according to this example embodiment, the apparent density of the powder measured by the measurement method of JIS Z 2504 is 3.5 g/cm$^3$ or more.

In the copper alloy powder for laminating and shaping according to this example embodiment, the adhesion of the copper alloy powder obtained from a failure envelope obtained by a shearing test is 0.600 kPa or less.

Additionally, the copper alloy powder for laminating and shaping according to this example embodiment can further contain a zirconium element an amount of which is more than 0 wt% and equal to or less than 0.20 wt%.

The copper alloy laminated and shaped object according to this example embodiment is laminated and shaped by a laminating and shaping apparatus using the copper alloy powder for laminating and shaping according to this example embodiment, and contains a chromium element an amount of which is equal to or more than 0.40 wt% or equal to or less than 1.5 wt%, a silver element an amount of which is equal to or more than 0.10 wt% or equal to or less than 1.0 wt%, and a balance of pure copper and unavoidable impurities.

Also, the copper alloy laminated and shaped object according to this example embodiment is laminated and shaped by a laminating and shaping apparatus using the copper alloy powder for laminating and shaping according to this example embodiment, and contains a chromium element an amount of which is equal to or more than 0.40 wt% or equal to or less than 1.5 wt%, a silver element an amount of which is equal to or more than 0.10 wt% or equal to or less than 1.0 wt%, a zirconium element an amount of which is more than 0 wt% and equal to or less than 0.20 wt%, and a balance of pure copper and unavoidable impurities.

The copper alloy laminated and shaped object according to this example embodiment has an electrical conductivity of 70%IACS or more.

The manufacturing method of the copper alloy laminated and shaped object according to this example embodiment further includes an aging treatment step of holding the copper alloy laminated and shaped object according to this example embodiment at 450°C to 700°C.

By adding silver element as the third element to the copper-chromium alloy, the copper alloy powder for laminating and shaping according to this example embodiment enables to manufacture the copper alloy laminated and shaped object that has an excellent electrical conductivity and mechanical strength located in the region on the upper side of the boundary line represented by equation (1), that is, in the region on the high strength side and the high electrical conductivity side.

(Copper Alloy Powder for Laminating and Shaping of This Example Embodiment)

The manufacturing method of the copper alloy powder for laminating and shaping according to this example embodiment is not particularly limited. A method of rapidly solidifying powder particles from a molten state, such as a gas atomization method, a water atomization method, a centrifugal atomization method, a plasma atomization method, or a plasma rotating electrode method, is preferably used. From the viewpoint of mass production, the gas atomization method is particularly preferable. The manufactured powder can be classified by a known classifying method under predetermined classifying conditions and adjusted to a copper alloy powder for laminating and shaping with an appropriate grain size. As a classifying apparatus for executing classification, an air flow classifier can suitably be used.

In the copper-chromium alloy that is a precipitation strengthening type alloy, chromium element that is in a super-saturated solid solution state in copper as the substrate is precipitated by aging treatment, and the strength of the copper alloy improves. To obtain a copper alloy laminated and shaped object having a high mechanical strength, the content of chromium element is preferably 0.40 wt% or more. If the content is less than 0.40 wt%, the precipitation amount in aging treatment is insufficient, and the effect of improving the strength cannot sufficiently be obtained. The solid-solubility limit of chromium element to copper is said to be 0.7 wt% to 0.8 wt% at a eutectic temperature of about 1,076°C. Although the amount is small, if a manufacturing method of melting a metal and rapidly solidifying it, like an atomization method, is used as the powder manufacturing method, chromium element more than the solid-solubility limit can be contained in the copper substrate. Also, if a laminating and shaping method such as a powder bed fusion method is used, fusion by a laser or electron beam and rapid solidification are performed in the step. Hence, a laminated and shaped object can be produced while keeping chromium element more than the solid-solubility limit contained in the copper substrate. However, if the content of chromium element exceeds 1.5 wt%, the electrical conductivity greatly lowers, although an effect of further improving the mechanical strength can be obtained. For this reason, the content of chromium element is preferably 1.5 wt% or less.

Silver element is an important element considered to raise the chemical potential of chromium element and enhance the repulsive interaction between elements to promote precipitation of chromium element, as described above. If the content of silver element is less than 0.10 wt%, precipitation of chromium element is insufficient, and the high strength and the high electrical conductivity of the present invention cannot simultaneously be satisfied in balance. If the content of silver element exceeds 1.0 wt%, the ratio of silver element becomes high. However, even if the content of silver element is increased, no large effect can be obtained in terms of characteristic. In addition, since expensive silver element is excessively contained, the cost increases. For these reasons, the content of silver element is preferably 0.10 wt% or more and 1.0 wt% or less and, more preferably 0.20 wt% or more and 0.50 wt% or less.

For the purpose of improving quality in the manufacture of the copper alloy powder for laminating and shaping according to this example embodiment and improving quality stability of the laminated and shaped object, zirconium element can further be contained. Zirconium element serving as a deoxidizer couples with oxygen that degrades quality to form a compound, thereby suppressing the influence of oxygen. However, zirconium element has a high affinity with silver element and reduces the above-described effect of silver element. For this reason, the content of zirconium element is preferably 0.20 wt% or less.

Note that the copper alloy powder for laminating and shaping according to this example embodiment sometimes contains unavoidable impurities in addition to chromium and silver elements. The unavoidable impurities are unavoidably mixed in the manufacturing steps of the copper alloy powder for laminating and shaping, and examples are oxygen, phosphorus, iron, aluminum, silicon, and titanium. Since these unavoidable impurities may lower the electrical conductivity, their content is preferably 0.10 wt% or less, more preferably 0.05 wt% or less, and more preferably 0.01 wt% or less.

The powder used for laminating and shaping is required to be suitable for the processes of laminating and shaping, such as the step of supplying the powder from a hopper onto a shaping stage, the step of forming a powder layer evenly laid in a predetermined thickens, and the step of melting and solidification. Hence, the following conditions are needed. The conditions are a particle size adjusted within an appropriate range, an apparent density within an appropriate range, and the fluidity of the powder that enables supply from the supply hopper and formation of an appropriate powder layer.

The 50% particle size of the copper alloy powder for laminating and shaping means the integrated 50% particle size (so-called median diameter D50) of the powder in the integrated grain size distribution based on a volume measured by a laser diffraction method, and is preferably included in the range of 3 $\mu$m to 200 $\mu$m. If the 50% particle size is less than 3 $\mu$m, the fluidity of the powder does not exist, and no powder bed can be formed even by a laminating and shaping apparatus using a laser powder bed fusion method. Also, the powder intensely spatters and readheres to the laminated and shaped object, resulting in surface defects. If the 50% particle size is larger than 100 $\mu$m in a case where laminating and shaping are performed by the laser powder bed fusion method, or if the 50% particle size is larger than 200 $\mu$m in a case where laminating and shaping are performed by an electron beam powder bed fusion method, the surface of the powder bed is rough, and a powder bed suitable for shaping cannot be formed. In addition, the surface of the laminated and shaped object is roughened to cause an improper appearance, and a molten pool generated in the powder layer at the time of beam irradiation does not reach a solidification layer immediately below, resulting in insufficient melting and solidification and a shaping failure. In the laser powder bed fusion method, the 50% particle size is preferably 3 $\mu$m to 100 $\mu$m, more preferably 5 $\mu$m to 75 $\mu$m, and more preferably 10 $\mu$m to 45 $\mu$m. In the electron beam powder bed fusion method, the 50% particle size is preferably 10 $\mu$m to 200 $\mu$m, more preferably 25 $\mu$m to 150 $\mu$m, and more preferably 45 $\mu$m to 105 $\mu$m.

As for apparent density of the copper alloy powder for laminating and shaping, the apparent density of the powder measured by the measurement method of JIS Z 2504 is preferably 3.5 g/cm$^3$ or more. If the apparent density is less than 3.5 g/cm$^3$, the powder filling property of a powder layer laid by squeegeeing lowers, and an appropriate powder layer cannot be formed. In addition, since the filling property of the powder lowers, holes are formed in the laminated and shaped object, and the density of the laminated and shaped object lowers.

In the laminating and shaping method, a fluidity is an especially important powder characteristic. In particular, in the powder bed fusion method, the fluidity is the most important powder characteristic directly associated with the quality of a laminated and shaped object in powder supply from the supply hopper, powder supply from a recoater, and formation of a powder layer on the shaping stage. In the powder bed fusion method, it is necessary to evenly lay the powder in a predetermined thickness on the shaping stage. The step of laying the powder is called squeegeeing, and the laying property of the powder is called a squeegeeing property. The powder used in the laminating and shaping method needs to have a sufficient squeegeeing property, and an appropriate fluidity is thus needed for the powder. As an index for measuring the fluidity of a metal powder, a flow rate (FR) defined by JIS Z 2502 "Metallic powders - Determination of flow rate" is used. As for a fine powder which is mainly used in the laser powder bed fusion method and has a 50% particle size of 50 $\mu$m or less, in some cases, the powder does not flow from a measurement container. For this reason, measurement is impossible, and the fluidity cannot be evaluated. Hence, as an index for evaluating the fluidity of a fine powder, it is effective to use an adhesion of powder, which is obtained by a direct shear testing method of powder bed (to be referred to as a shearing test hereinafter) defined in the standard of The Association of Powder Process Industry and Engineering, JAPAN (SAP15-13: 2013) "Direct shear testing method of powder bed". In the shearing test, a shearing stress generated when a pressure is applied vertically to a powder layer formed by consolidation in the vertical direction, and the powder layer is slid sideways in the horizontal direction in this state is measured, thereby obtaining the adhesion from the obtained failure envelope of the powder layer. In the shearing test, the measurement can be done using, for example, Powder Rheometer FT4 available from Freeman Technology. If the adhesion is 0.600 kPa or less, it can be determined that the copper alloy powder for laminating and shaping has a sufficient fluidity for enabling to lay an even powder layer and a satisfactory squeegeeing property. This can obtain a high-density homogeneous laminated and shaped object. If the adhesion is larger than 0.600 kPa, the fluidity of the copper alloy powder for laminating and shaping is not sufficient, the squeegeeing property is poor, and an appropriate powder layer cannot be formed. Hence, in the copper alloy powder for laminating and shaping, the adhesion of the copper alloy powder obtained from the failure envelope obtained by the shearing test is preferably 0.600 kPa or less.

(Copper Alloy Laminated and Shaped Object of This Example Embodiment)

To product a copper alloy laminated and shaped object, various known metal laminating and shaping techniques can be used. For example, in the powder bed fusion method, steps of laying a metal powder on the shaping stage while smoothing it by a blade or a roller to form a powder layer, and irradiating a predetermined position of the formed powder layer with a laser or electron beam to sinter/melt the metal powder are repetitively performed, thereby producing a laminated and shaped object. In the shaping process of metal laminating and shaping, it is necessary to control a very large number of process parameters to obtain a high-quality laminated and shaped object. In the laser powder bed fusion method, many scanning conditions such as a laser output and a laser scanning speed exist. Hence, when setting optimum scanning conditions, main parameters are adjusted using an energy density that is an index comprehensively representing the main parameters. Letting P [W] be the laser output, v [mm/s] be the laser scanning speed, s [mm] be the laser scanning pitch, and t [mm] be the thickness of the powder layer, an energy density E [J/mm$^3$] is decided by E = P/(v $\times$ s $\times$ t). In the laser powder bed fusion method, the energy density is preferably 150 J/mm$^3$ or more and 450 J/mm$^3$ or less. If the energy density is less than 150 J/mm$^3$, an unmolten part or a melting failure occurs in the powder layer, and a defect such as a void occurs in the laminated and shaped object. If the energy density exceeds 450 J/mm$^3$, sputtering occurs to make the surface of the powder layer unstable, and a defect such as a void occurs in the laminated and shaped object. In the electron beam powder bed fusion method, if negative charges are accumulated in the powder layer to cause charge-up when the powder layer is irradiated with an electron beam, a smoke phenomenon that the powder is thrown up like a fog occurs, resulting in a melting failure. Hence, to prevent the charge-up, a preliminary step of preheating and temporarily sintering the powder layer is necessary. However, if the preheating temperature is too high, sintering progresses to cause necking, and the remaining powder is difficult to remove from the laminated and shaped object after shaping. Hence, in the copper alloy powder for laminating and shaping, the preheating temperature is preferably set to 400°C to 800°C. Note that the metal laminating and shaping technique using the powder bed fusion method has been exemplified here. The general laminating and shaping method of producing a laminated and shaped object using the copper alloy powder for laminating and shaping according to the present invention is not limited to this, and, for example, a laminating and shaping method using a directed energy deposition method may be employed.

(Aging Treatment)

When aging treatment is performed for the laminated and shaped object, chromium element that is in a super-saturated solid solution state is precipitated, the strength of the laminated and shaped object improves, and the electrical conductivity improves. Hence, the aging treatment step is an essential step to obtain the high-strength and high-electrical conductivity characteristic of the present invention. The aging treatment can be executed by heating the laminated and shaped object to a predetermined temperature and holding this for a predetermined time. The aging treatment is preferably performed in a reducing atmosphere, in an inert gas, or in vacuum. The effect of the aging treatment is determined by the combination of the aging treatment temperature and the aging treatment time. It is therefore important to set appropriate conditions in consideration of the balance between efficiency and a target characteristic. The aging treatment temperature is preferably 450°C or more and 700°C or less. More preferably, the aging treatment temperature is 500°C or more and 700°C or less. To particularly improve the mechanical strength, the aging treatment temperature is preferably set to 500°C. To obtain a particularly high electrical conductivity, the aging treatment temperature can be set to 700°C. The aging treatment time is preferably set to 0.5 hrs or more and 10 hrs or less if the aging treatment temperature is less than 500°C. The aging treatment time is preferably set to 0.5 hrs or more and 3 hrs or less if the aging treatment temperature is 500°C or more. If the aging treatment time is less than the above-described set time, precipitation of chromium element is insufficient. Also, if the aging treatment time exceeds the above-described set time, overaging occurs, and precipitated chromium particles become coarse, resulting in lowering of the hardness. If the aging treatment temperature is less than 450°C, it is not practical because a long time is needed to obtain the aging effect. If the aging treatment temperature exceeds 700°C, overaging occurs, and the precipitation phase of chromium element becomes coarse, resulting in lowering of the strength. In the laminated and shaped object produced using the copper alloy powder for laminating and shaping according to the present invention, even if the aging treatment temperature is 500°C, and the aging treatment time of about 1 hr, the electrical conductivity and the mechanical strength can sufficiently be improved by the repulsive interaction between chromium and silver elements.

(Evaluation of Copper Alloy Laminated and Shaped Object)

The Vickers hardness is measured by a method complying with "JIS Z 2244: Vickers hardness test-Test method". The Vickers hardness can be measured using, for example, a micro Vickers hardness tester HMV-G21-DT available from Shimadzu Corporation.

A laminated and shaped object has an electrical conductivity of 70%IACS or more. The electrical conductivity can be measured by, for example, an eddy current conductivity meter. An example of the eddy current conductivity meter is a high-performance eddy current conductivity meter SigmaCheck available from Nihon Matech Corporation. Note that IACS (International Annealed Copper Standard) is the electrical conductivity standard defined by setting the electrical conductivity of an internationally adopted annealed standard copper (volume resistivity: 1.7241 $\times$ 10$^{-2}$ $\mu\Omega$m) as 100%IACS. The electrical conductivity can be adjusted by aging treatment and is preferably appropriately adjusted in consideration of the balance to a desired Vickers hardness. The electrical conductivity is preferably 80%IACS or more, and more preferably 90%IACS or more.

According to this example embodiment, it is possible to provide a copper alloy powder for laminating and shaping capable of obtaining a copper alloy laminated and shaped object having a high strength and a high electrical conductivity, and a copper alloy laminated and shaped object.

[Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims.

EXAMPLES

The present invention will be described below in detail based on examples and comparative examples. The following examples and comparative examples are merely detailed examples for facilitating understanding of the technical contents of the present invention, and the technical scope of the present invention is not limited by these detailed examples.

Copper alloy powders for laminating and shaping of various kinds of compositions shown in Table 1 below were manufactured by the gas atomization method. Various kinds of obtained copper alloy powders were classified such that the particle size for the laser powder bed fusion method was 10 $\mu$m or more and 45 $\mu$m or less, and the particle size for the electron beam powder bed fusion method was 45 $\mu$m or more and 105 $\mu$m or less.

The content of each component element in the obtained copper alloy powders for laminating and shaping was measured by the ICP atomic emission spectrometry method. Also, the apparent density (AD) (g/cm$^3$) of each obtained copper alloy powder for laminating and shaping was measured in accordance with JIS Z 2504. In addition, the flow rate (FR) (sec/50g) of each obtained copper alloy powder for laminating and shaping was measured in accordance with JIS Z 2502. Also, the 50% particle size (D50) ($\mu$m) was measured by the laser diffraction method (Microtrac MT3300: available from MicrotracBEL).

A shearing test was conducted using Powder Rheometer FT4 (available from Freeman Technology), and the adhesion (kPa) of each obtained copper alloy powder for laminating and shaping was measured. The squeegeeing property of each obtained copper alloy powder for laminating and shaping was evaluated by actually laying out the powder to be used in the shaping test to form a powder layer on the shaping stage of a 3D powder laminating and shaping apparatus (powder bed fusion method/laser method or electron beam method). The measurement results of various kinds of powder characteristics concerning the copper alloy powders for laminating and shaping used in Examples 1 to 11 and Comparative Examples 1 to 12 are shown in Table 1. The copper alloy powder of Comparative Example 1 had a poor squeegeeing property, and therefore, squeegeeing was impossible, and laminating and shaping could not be executed.

[Table 1]

| | Composition | | | Powder characteristic | | | | | | Evaluation of shaping property | |
|---|---|---|---|---|---|---|---|---|---|---|---|
| | Element content (wt%) | | | D50 | AD | FR | Adhesion | Squeegeeing property | Relative density | Remarks | |
| | Cr | Ag | Zr | (μm) | (g/cm³) | (sec/50g) | (kPa) | | % | | |
| Example 1 | 1.18 | 0.19 | - | 24.2 | 5.10 | none | 0.570 | ○ | 99.2 | excellent | |
| Example 2 | 1.18 | 0.19 | - | 27.3 | 4.89 | 14.2 | 0.474 | ○ | 99.4 | excellent | |
| Example 3 | 0.51 | 0.19 | - | 26.8 | 5.01 | none | 0.511 | ○ | 99.3 | excellent | |
| Example 4 | 0.47 | 0.46 | - | 28.6 | 4.98 | none | 0.404 | ○ | 99.5 | excellent | |
| Example 5 | 1.34 | 0.19 | - | 28.8 | 5.11 | 33.0 | 0.438 | ○ | 99.8 | excellent | |
| Example 6 | 1.36 | 0.45 | - | 26.9 | 5.11 | 29.0 | 0.401 | ○ | 99.6 | excellent | |
| Example 7 | 1.16 | 0.97 | - | 27.7 | 5.26 | 38.4 | 0.455 | ○ | 99.4 | excellent | |
| Example 8 | 1.18 | 0.19 | - | 72.1 | 4.86 | 11.8 | 0.366 | ○ | 99.8 | excellent | |
| Example 9 | 1.34 | 0.19 | - | 75.4 | 4.93 | 12.4 | 0.402 | ○ | 99.8 | excellent | |
| Example 10 | 1.06 | 0.19 | - | 91.0 | 4.88 | 11.4 | 0.185 | ○ | 99.6 | excellent | |
| Example 11 | 0.99 | 0.19 | 0.19 | 28.6 | 5.06 | 28.8 | 0.446 | ○ | 99.5 | excellent | |
| Comparative Example 1 | 1.08 | 0.19 | - | 16.5 | 3.45 | none | 0.716 | × | Shaping is impossible | Powder cannot evenly be laid, and shaping is impossible | |
| Comparative Example 2 | 1.06 | 0.20 | - | 2.68 | 2.53 | none | 1.121 | × | Measurement is impossible | Powder intensely spatters and readheres to shaped object, and surface defects are observed | |
| Comparative Example 3 | 0.97 | 0.20 | - | 30.6 | 4.04 | none | 0.613 | × | Measurement is impossible | Powder can be laid, but many coarse portions exist | |
| Comparative Example 4 | 1.08 | 0.21 | - | 8.32 | 3.42 | none | 0.583 | × | Measurement is impossible | Filling of powder layer is insufficient, and density is low | |
| Comparative Example 5 | 0.95 | - | - | 30.0 | 5.17 | 26.6 | 0.481 | ○ | 98.7 | excellent | |
| Comparative Example 6 | 1.06 | - | - | 35.2 | 4.86 | 10.8 | 0.154 | ○ | 99.2 | excellent | |

(continued)

| | Composition | | | Powder characteristic | | | | | Relative density | Evaluation of shaping property |
|---|---|---|---|---|---|---|---|---|---|---|
| | Element content (wt%) | | | D50 | AD | FR | Adhesion | Squeegeeing property | | Remarks |
| | Cr | Ag | Zr | ($\mu$m) | (g/cm$^3$) | (sec/ 50g) | (kPa) | | % | |
| Comparative Example 7 | 0.41 | 0.09 | - | 27.4 | 5.07 | none | 0.491 | ○ | 99.2 | excellent |
| Comparative Example 8 | 0.32 | 0.19 | - | 23.4 | 5.01 | none | 0.507 | ○ | 98.1 | excellent |
| Comparative Example 9 | 1.04 | 0.05 | - | 25.7 | 5.16 | none | 0.475 | ○ | 99.1 | excellent |
| Comparative Example 10 | 1.76 | 0.49 | - | 23.9 | 5.13 | none | 0.531 | ○ | 99.5 | excellent |
| Comparative Example 11 | 1.00 | - | 0.14 | 32.3 | 4.94 | none | 0.509 | ○ | 99.2 | excellent |
| Comparative Example 12 | 0.99 | 0.19 | 0.27 | 28.7 | 5.02 | none | 0.440 | ○ | 99.6 | excellent |

Using the copper alloy powder for laminating and shaping in each of Examples 1 to 7 and 11 and Comparative Examples 2 to 12, a laminated and shaped object to be used in tests was produced by a 3D powder laminating and shaping apparatus (SLM280HL available from SLM Solutions GmbH) including an Yb fiber laser with a wavelength of 1,064 nm. Laminating and shaping were performed under the conditions that the laminating thickness was 25 to 50 $\mu$m, the laser output was 300 to 700 W, the scanning speed was 900 to 1,500 mm/sec, and the energy density was 150 to 450 J/mm$^3$. Using the copper alloy powder for laminating and shaping in each of Examples 8 to 10, a laminated and shaped object to be used in tests was produced by a 3D powder laminating and shaping apparatus (EBM A2X available from ArcamAB) with an electron beam. Laminating and shaping were performed under the conditions that the laminating thickness was 50 to 100 $\mu$m, the electron beam voltage was 60 kV, and the preheating temperature was 600°C to 700°C.

Using the above-described 3D powder laminating and shaping apparatus, a columnar laminated and shaped object with a diameter $\phi$ of 14 mm and a height of 10 mm was produced. The density of the produced laminated and shaped object was measured by the Archimedes method using helium gas as a substitution medium (AccuPyc1330 available from Shimadzu Corporation), and a relative density (%) was calculated by setting a theoretical density (the density of a molten material having the same composition as the laminated and shaped object) to 100%. The measurement results are shown in Table 1. In the laminated and shaped objects obtained using the copper alloy powders for laminating and shaping of Comparative Examples 2 to 4, many surface defects or voids existed, and reliable density measurement could not be performed. Hence, these were excluded from the following laminated and shaped object characteristic evaluation.

To compare the influence on the characteristic of a shaped object in a case where a shaped object was produced using a melting method different from the laminating and shaping method, a molten material that is a shaped object was produced using a known melting method and evaluated. As the melting method, an arc melting method was used. Arc melting was performed using the copper alloy powder for laminating and shaping of the present invention, and an arc-melted material was produced. The arc-melted material was produced in the following way. First, the copper alloy powder for laminating and shaping used in Example 1 was press-formed to produce a green compact. The produced green compact was arc-melted in an argon atmosphere using a vacuum arc melting furnace available from Nissin Giken Corporation, thereby producing an arc-melted material. The arc-melted material was defined as Comparative Example 13.

For each of the laminated and shaped objects of Examples 1 to 11 and Comparative Examples 5 to 12 manufactured by the 3D powder laminating and shaping apparatus and the arc-melted material of Comparative Example 13 produced by arc melting, the electrical conductivity (%IACS) was measured using an eddy current conductivity meter (high-performance eddy current conductivity meter SigmaCheck: available from Nihon Matech Corporation). In addition, the Vickers hardness (Hv) of each of the laminated and shaped objects and the arc-melted material was measured using a micro Vickers hardness tester (micro Vickers hardness tester HMV-G21-DT: available from Shimadzu Corporation).

For the produced laminated and shaped objects and arc-melted material, aging treatment was performed in an inert atmosphere for 8 hrs at a temperature set to 400°C or 450°C and for 1 hr at a temperature set to 500°C, 600°C, or 700°C. The electrical conductivity of each of the laminated and shaped objects and the arc-melted material, which underwent the aging treatment, was measured by the eddy current conductivity meter. In addition, the Vickers hardness was measured by the micro Vickers hardness tester. For the laminated and shaped objects of Examples 1 to 11 and Comparative Examples 5 to 12 manufactured by the 3D powder laminating and shaping apparatus and the arc-melted material of Comparative Example 13, the evaluation results of various kinds of characteristics are shown in Table 2.

[Table 2]

| | Composition | | | Laminating and shaping method | Electrical conductivity [%IACS] | | | | | | Vickers hardness [Hv] | | | | | |
|---|---|---|---|---|---|---|---|---|---|---|---|---|---|---|---|---|
| | Element content (wt%) | | | | Without aging treatment | 400°C×8h | 450°C×8h | 500°C×1h | 600°C×1h | 700°C×1h | Without aging treatment | 400°C×8h | 450°C×8h | 500°C×1h | 600°C×1h | 700°C×1h |
| | Cr | Ag | Ar | | | | | | | | | | | | | |
| Example 1 | 1.18 | 0.19 | - | laser | 20.9 | 50.8 | 81.1 | 81.9 | 93.9 | 97.1 | 93.8 | 160.2 | 203.1 | 202.9 | 147.5 | 99.2 |
| Example 2 | 1.18 | 0.19 | - | laser | 20.8 | 49.1 | 80.5 | 81.1 | 94.0 | 97.1 | 101.7 | 157.4 | 208.9 | 206.3 | 140.7 | 113.7 |
| Example 3 | 0.51 | 0.19 | - | laser | 39.0 | 72.4 | 90.5 | 91.3 | 97.6 | 98.1 | 98.1 | 129.3 | 161.7 | 161.6 | 120.4 | 98.4 |
| Example 4 | 0.47 | 0.46 | - | laser | 41.6 | 77.8 | 91.6 | 92.1 | 96.6 | 97.2 | 103.3 | 136.5 | 154.9 | 155.0 | 117.6 | 100.6 |
| Example 5 | 1.34 | 0.19 | - | laser | 19.0 | 45.2 | 77.1 | 78.4 | 92.3 | 98.0 | 101.1 | 163.6 | 230.3 | 229.6 | 151.6 | 108.4 |
| Example 6 | 1.36 | 0.45 | - | laser | 19.0 | 46.6 | 78.5 | 79.3 | 92.4 | 97.1 | 108.4 | 170.3 | 233.1 | 231.2 | 153.8 | 110.6 |
| Example 7 | 1.16 | 0.97 | - | laser | 22.3 | 48.6 | 81.0 | 80.9 | 91.0 | 96.4 | 93.1 | 160.4 | 206.1 | 207.2 | 145.4 | 116.4 |
| Example 8 | 1.18 | 0.19 | - | electron beam | 20.9 | 49.3 | 80.9 | 82.2 | 94.8 | 97.3 | 94.1 | 164.1 | 206.4 | 208.4 | 144.5 | 110.3 |
| Example 9 | 1.34 | 0.19 | - | electron beam | 19.6 | 46.3 | 79.1 | 80.3 | 92.9 | 97.3 | 104.0 | 165.6 | 231.2 | 233.3 | 156.1 | 112.5 |
| Example 10 | 1.06 | 0.19 | - | electron beam | 21.0 | 49.0 | 80.0 | 80.7 | 92.2 | 97.0 | 95.7 | 159.3 | 203.3 | 202.1 | 140.4 | 108.9 |
| Example 11 | 0.99 | 0.19 | 0.19 | laser | 21.4 | 49.1 | 78.6 | 79.7 | 90.0 | 94.0 | 94.2 | 145.8 | 219.1 | 216.2 | 143.3 | 117.0 |
| Comparative Example 5 | 0.95 | - | - | laser | 21.8 | 47.4 | 76.0 | 77.8 | 86.3 | 89.8 | 104.0 | 148.3 | 202.6 | 204.3 | 136.5 | 90.3 |
| Comparative Example 6 | 1.06 | - | - | laser | 20.5 | 48.1 | 77.8 | 79.3 | 89.0 | 90.3 | 94.3 | 146.4 | 201.2 | 200.5 | 130.4 | 89.4 |
| Comparative Example 7 | 0.41 | 0.09 | - | laser | 41.5 | 72.5 | 88.2 | 89.1 | 94.1 | 94.8 | 84.2 | 107.0 | 145.1 | 144.5 | 108.7 | 90.1 |
| Comparative Example 8 | 0.32 | 0.19 | - | laser | 48.3 | 65.7 | 78.3 | 80.1 | 82.8 | 83.5 | 80.3 | 88.0 | 116.8 | 119.1 | 92.8 | 75.6 |
| Comparative Example 9 | 1.04 | 0.05 | - | laser | 20.6 | 48.5 | 77.5 | 79.5 | 90.3 | 91.4 | 95.2 | 149.6 | 199.5 | 200.4 | 135.6 | 92.3 |

| | Composition | | | Laminating and shaping method | Electrical conductivity [%IACS] | | | | | | Vickers hardness [Hv] | | | | | |
|---|---|---|---|---|---|---|---|---|---|---|---|---|---|---|---|---|
| | Element content (wt%) | | | | Without aging treatment | 400°C× 8h | 450°C× 8h | 500°C× 1h | 600°C× 1h | 700°C× 1h | Without aging treatment | 400°C× 8h | 450°C× 8h | 500°C× 1h | 600°C× 1h | 700°C× 1h |
| | Cr | Ag | Ar | | | | | | | | | | | | | |
| Comparative Example 10 | 1.76 | 0.49 | - | laser | 16.6 | 37.7 | 67.0 | 68.1 | 80.4 | 75.9 | 107.5 | 179.4 | 251.2 | 247.6 | 181.7 | 127.3 |
| Comparative Example 11 | 1.00 | - | 0.14 | laser | 19.8 | 46.5 | 73.6 | 74.5 | 85.1 | 88.9 | 97.5 | 142.5 | 224.1 | 223.8 | 142.9 | 114.4 |
| Comparative Example 12 | 0.99 | 0.19 | 0.27 | laser | 20.3 | 46.0 | 75.1 | 75.4 | 87.0 | 89.9 | 101.2 | 144.5 | 217.4 | 216.1 | 143.7 | 114.7 |
| Comparative Example 13 | 1.18 | 0.19 | | arc melting | 42.0 | 74.7 | 91.0 | 91.6 | 94.2 | 93.0 | 69.7 | 109.6 | 125.2 | 126.6 | 101.3 | 86.6 |

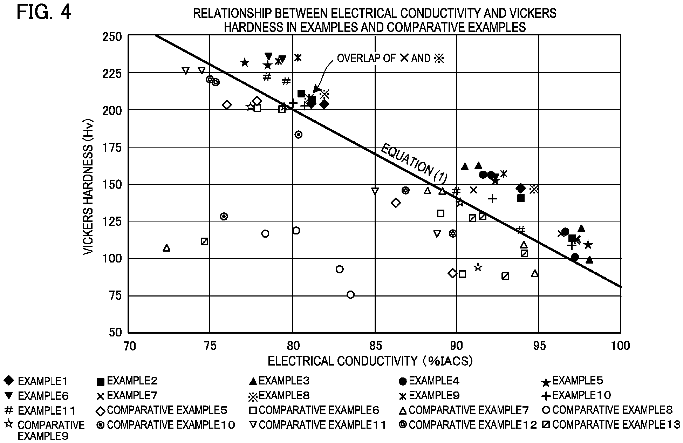

Then, Fig. 4 similar to Fig. 1 was generated from the evaluation results of various kinds of characteristics in Table 2.

Fig. 4 is a graph showing the relationship and the boundary line between the Vickers hardness and the electrical conductivity of each of copper alloy laminated and shaped objects obtained in examples and comparative examples.

(Evaluation of Examples and Comparative Examples)

In Comparative Examples 5 and 6, since a copper-chromium alloy containing no silver element was used, the high strength and the high electrical conductivity of the present invention could not simultaneously be satisfied in balance. Similarly, in Comparative Example 11, since a copper-chromium-zirconium alloy containing no silver element was used, the high strength and the high electrical conductivity of the present invention could not simultaneously be satisfied in balance. In Comparative Example 7, since the content of silver element was smaller than the content of the present invention, the high strength and the high electrical conductivity of the present invention could not simultaneously be satisfied in balance. In Comparative Example 8, since the content of chromium element of the present invention was not met, neither the strength not the electrical conductivity could obtain a high value. In Comparative Example 9, the content of chromium element was sufficient, but the content of silver element was too small, and therefore, the high strength and the high electrical conductivity of the present invention could not simultaneously be satisfied in balance. In Comparative Example 10, a sufficient amount of silver element was contained. However, since 1.76 wt% of chromium element was contained, a high Vickers hardness was exhibited, but the electrical conductivity was low, and the high strength and the high electrical conductivity of the present invention could not simultaneously be satisfied in balance. In Comparative Example 12, sufficient amounts of chromium and silver elements were contained. However, since the amount of zirconium element was too large, the electrical conductivity lowered, and the high strength and the high electrical conductivity of the present invention could not simultaneously be satisfied in balance.

In Comparative Example 13 in which the arc-melted material was produced by arc melting, the same raw material powder as in Example 1 was used. Although a high electrical conductivity was obtained, the Vickers hardness was lower than the value of Example 1 in which the laminated and shaped object was produced by laminating and shaping, and the Vickers hardness could not exceed that of equation (1).

On the other hand, in Examples 1 to 11, the high strength and the high electrical conductivity were simultaneously implemented in balance.

From above, according to the examples, it was confirmed that a copper alloy powder for laminating and shaping capable of implementing an excellent electrical conductivity and strength and a copper alloy laminated and shaped object having an excellent electrical conductivity and strength can be provided.

In addition, from comparison with the arc-melted material in Comparative Example 13 above, use of the laminating and shaping method has the advantage of improving a characteristic such as the strength, and the method is considered to be superior as a manufacturing method.

This application is based upon and claims the benefit of priority from Japanese patent application No. 2020-216764, filed on December 25, 2020, the disclosure of which is incorporated herein in its entirety by reference.

**Claims**

1.　A copper alloy powder for laminating and shaping, wherein the copper alloy powder contains a chromium element an amount of which is equal to or more than 0.40 wt% and equal to or less than 1.5 wt%, a silver element an amount of which is equal to or more than 0.10 wt% and equal to or less than 1.0 wt%, and a balance of pure copper and unavoidable impurities.

2.　The copper alloy powder according to claim 1, wherein a 50% particle size is equal to or more than 3 $\mu$m and equal to or less than 200 $\mu$m.

3.　The copper alloy powder according to claim 1 or 2, wherein an apparent density of the powder measured by a measurement method of JIS Z 2504 is not less than 3.5 g/cm$^3$.

4.　The copper alloy powder according to any one of claims 1 to 3, wherein an adhesion of the copper alloy powder obtained from a failure envelope obtained by a shearing test is equal to or less than 0.600 kPa.

5.　The copper alloy powder according to any one of claims 1 to 4, wherein the copper alloy powder further contains a zirconium element an amount of which is more than 0 wt% and equal to or less than 0.20 wt%.

6. A copper alloy object laminated and shaped by a laminating and shaping apparatus using a copper alloy powder for laminating and shaping according to any one of claims 1 to 4, wherein the copper alloy object contains a chromium element an amount of which is equal to or more than 0.40 wt% and equal to or less than 1.5 wt%, a silver element an amount of which is equal to or more than 0.10 wt% and equal to or less than 1.0 wt%, and a balance of pure copper and unavoidable impurities.

7. A copper alloy object laminated and shaped by a laminating and shaping apparatus using a copper alloy powder for laminating and shaping according to claim 5, wherein the copper alloy object contains a chromium element an amount of which is equal to or more than 0.40 wt% and equal to or less than 1.5 wt%, a silver element an amount of which is equal to or more than 0.10 wt% and equal to or less than 1.0 wt%, a zirconium element an amount of which is more than 0 wt% and equal to or less than 0.20 wt%, and a balance of pure copper and unavoidable impurities.

8. The copper alloy object according to claim 6 or 7, wherein the copper alloy object has an electrical conductivity of not less than 70%IACS.

9. A method of manufacturing a copper alloy object, comprising:

   laminating and shaping a copper alloy object by a laminating and shaping apparatus using a copper alloy powder for laminating and shaping according to any one of claims 1 to 5; and
   holding the copper alloy object at 450°C to 700°C.

10. A method of evaluating a copper alloy powder for laminating and shaping, comprising:

   laminating and shaping a copper alloy object using the copper alloy powder for laminating and shaping as an evaluation target;
   measuring an electrical conductivity X (%IACS) and a Vickers hardness (Hv) of the copper alloy object; and
   evaluating the copper alloy powder for laminating and shaping based on whether or not, if the electrical conductivity X (%IACS) and the Vickers hardness (Hv) are plotted on a two-dimensional graph formed by an X-axis and a Y-axis, a point (X, Y) is located on a high strength side and a high electrical conductivity side of a boundary line represented by (Y = -6X + 680).

FIG. 1

START

S201

PERFORM FORMATION PROCESSING OF
POWDER LAYER

S202

IS FORMATION
OF POWDER LAYER
POSSIBLE? —— NO

YES

S203

MANUFACTURE LAMINATED AND SHAPED
OBJECT USING COPPER ALLOY POWDER
FOR LAMINATING AND SHAPING AS
EVALUATION TARGET

S204

MEASURE ELECTRICAL CONDUCTIVITY X
(%IACS) AND VICKERS HARDNESS Y (Hv)
OF MANUFACTURED LAMINATED AND
SHAPED OBJECT

S205

(X, Y) LOCATED IN
REGION ON UPPER SIDE OF
BOUNDARY (Y ≧ -6X + 680)? —— NO

YES

S207                                          S209

EVALUATE THAT POWDER IS SUFFICIENT
AS COPPER ALLOY POWDER FOR
LAMINATING AND SHAPING

EVALUATE THAT POWDER IS
INSUFFICIENT AS COPPER ALLOY
POWDER FOR LAMINATING AND SHAPING

END

FIG. 2

FIG. 3

Cu-Ag

ASM International 2012, Diagram No. 106003

Ag-Cr

ASM International 2006, Diagram No. 900016

FIG. 4

RELATIONSHIP BETWEEN ELECTRICAL CONDUCTIVITY AND VICKERS HARDNESS IN EXAMPLES AND COMPARATIVE EXAMPLES

## INTERNATIONAL SEARCH REPORT

| | International application No. |
|---|---|
| | **PCT/JP2021/045516** |

**A. CLASSIFICATION OF SUBJECT MATTER**

*C22C 9/00*(2006.01)i; *B22F 1/00*(2022.01)i; *B22F 1/05*(2022.01)i; *B22F 10/28*(2021.01)i; *B22F 10/34*(2021.01)i; *B33Y 10/00*(2015.01)i; *B33Y 70/00*(2020.01)i; *B33Y 80/00*(2015.01)i; *C22C 1/04*(2006.01)i; *C22F 1/08*(2006.01)i; *C22F 1/00*(2006.01)n

FI: C22C9/00; B22F1/00 L; B22F1/05; B33Y80/00; B33Y70/00; B33Y10/00; B22F10/28; B22F10/34; C22C1/04 A; C22F1/08 Q; C22F1/00 628; C22F1/00 630A; C22F1/00 621; C22F1/00 630C; C22F1/00 661A; C22F1/00 687; C22F1/00 691B; C22F1/00 691C

According to International Patent Classification (IPC) or to both national classification and IPC

**B. FIELDS SEARCHED**

Minimum documentation searched (classification system followed by classification symbols)

C22C9/00; B22F1/00; B22F1/05; B22F10/28; B22F10/34; B33Y10/00; B33Y70/00; B33Y80/00; C22C1/04; C22F1/08; C22F1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/239655 A1 (FURUKAWA ELECTRIC COMPANY, LIMITED) 19 December 2019 (2019-12-19) paragraphs [0020]-[0023], [0029]-[0033] | 5, 7 |
| A | | 1-4, 6, 8-10 |
| A | WO 2019/044073 A1 (NTT DATA ENGINEERING SYSTEMS CORPORATION) 07 March 2019 (2019-03-07) | 1-10 |
| A | CN 110872658 A (CENTRAL SOUTH UNIVERSITY) 10 March 2020 (2020-03-10) | 1-10 |
| A | JP 2018-154910 A (JX NIPPON MINING & METALS CORPORATION) 04 October 2018 (2018-10-04) | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 February 2022** | **22 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2021/045516** |

### C. DOCUMENTS CONSIDERED TO BE RELEVANT

| Category* | Citation of document, with indication, where appropriate, of the relevant passages | Relevant to claim No. |
|---|---|---|
| A | JP 2018-197389 A (DAIHEN CORPORATION) 13 December 2018 (2018-12-13) tables 8-10 | 1-10 |

Form PCT/ISA/210 (second sheet) (January 2015)

<div align="center">

**INTERNATIONAL SEARCH REPORT**
**Information on patent family members**

</div>

| | International application No. |
|---|---|
| | **PCT/JP2021/045516** |

| Patent document cited in search report | Publication date (day/month/year) | Patent family member(s) | Publication date (day/month/year) |
|---|---|---|---|
| WO 2019/239655 A1 | 19 December 2019 | (Family: none) | |
| WO 2019/044073 A1 | 07 March 2019 | JP 2019-70169 A | |
| CN 110872658 A | 10 March 2020 | (Family: none) | |
| JP 2018-154910 A | 04 October 2018 | (Family: none) | |
| JP 2018-197389 A | 13 December 2018 | US 2018/0111199 A1 tables 8-10 US 2021/0187614 A1 WO 2018/079304 A1 EP 3315229 A1 EP 3482856 A1 CN 107971489 A TW 201823481 A TW 201907016 A TW 201907017 A TW 201907018 A SG 11201903358T A KR 10-2019-0075987 A DK 3315229 T3 PL 3315229 T3 EP 3854503 A1 ES 2781565 T3 | |

Form PCT/ISA/210 (patent family annex) (January 2015)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6389557 B

- JP 2020216764 A